# EUROPÄISCHE PATENTANMELDUNG

(11) **EP 0 838 395 A2**
(43) Veröffentlichungstag der Anmeldung: **29.04.1998**
(21) Anmeldenummer: 97118546.7
(22) Anmeldetag: 24.10.1997
(51) Int. Cl.: B64D 17/56

(54) **Automatische Auslösevorrichtung für einen Fallschirm**

(30) Priorität: 25.10.1996 DE 19644451
(71) Anmelder: Cloth, Helmut, 33104 Paderborn (DE)
(72) Erfinder: Cloth, Helmut, 33104 Paderborn (DE)
(74) Vertreter: Glawe, Delfs, Moll & Partner

(57) **Zusammenfassung**

Die Erfindung betrifft eine automatische Auslösevorrichtung für einen Fallschirm, bei der die Momentanfallgeschwindigkeit und die Momentanhöhe aus den Daten eines Drucksensors (200) ermittelt werden, wobei der Fallschirm freigegeben wird, wenn bei einer Mindesthöhe die Momentanfallgeschwindigkeit einen Maximalwert überschreitet.

Um bei einer derartigen Auslösevorrichtung sicherzustellen, daß der Fallschirm nicht unnötig ausgelöst wird, beispielsweise ein Sicherungsfallschirm, wenn sich der Hauptfallschirm bereits geöffnet hat, ist zusätzlich ein Beschleunigungssensor (230) vorgesehen. Der Beschleunigungssensor (230) erfaßt die Bremsbeschleunigung aufgrund des geöffneten Hauptfallschirms und deaktiviert die Auslösevorrichtung.

Anstatt eines Beschleunigungssensors (230) können auch Kraftsensoren oder Dehnungssensoren an dem Leinensystem oder Gurtzeug des Fallschirms vorgesehen sein; alternativ kann die Beschleunigung auch aus den Daten des Drucksensors (200) durch zeitliche Ableitung ermittelt werden.

## Beschreibung

Die Erfindung bezieht sich auf eine automatische Auslösevorrichtung für einen Fallschirm, der im Oberbegriff des Patentanspruchs 1 angegebenen Art.

Eine derartige Auslösevorrichtung ist beispielsweise aus der EP-A-0281159 bzw. aus der EP-B1-0281159 bekannt.

Bei dieser Vorrichtung ist an oder in dem Aufnahmebehälter für den Fallschirm ein Drucksensor vorgesehen, der laufend der Umgebungsdruck ermittelt. Abhängig von den Daten des Drucksensors und Temperaturdaten sowie vorgegebenen Werten bezüglich einer Nullhöhe etc. werden über vorgegebene Algorithmen laufend Werte für die momentane Fallgeschwindigkeit und die Momentanhöhe beispielsweise aus der barometrischen Höhenformel ermittelt, und wenn während eines Sprungs eine vorgegebene Mindesthöhe mit einer Geschwindigkeit passiert wird, die über einer vorgebbaren Maximalgeschwindigkeit liegt, wird automatisch eine Sicherungseinrichtung ausgelöst, die den Fallschirm freigibt.

Auf diese Weise kann zuverlässig eine Auslösung des Fallschirms sichergestellt werden, auch wenn ein Springer beispielsweise während des Sprungs das Bewußtsein verliert und den Fallschirm nicht manuell auslösen kann.

Um ferner sicherzustellen, daß die Auslösevorrichtung nur bei einem tatsächlichen Absprung ausgelöst wird, wird zusätzlich die "Geschichte" des Sprungs analysiert, das heißt in der Anfangsphase des Sprungs wird aus den Geschwindigkeitsdaten beispielsweise eine Anfangsbeschleunigung ermittelt, die das Steigen aus dem Absetzflugzeug anzeigt, sowie das Konstantwerden der Fallgeschwindigkeit (Freifallphase). Nur bei Vorliegen derartiger Bedingungen wird die automatische Auslösevorrichtung aktiviert. Hinsichtlich der weiteren Einzelheiten wird auf die eingangs genannte Druckschrift verwiesen, auf deren Gegenstand hier ausdrücklich Bezug genommen wird.

Diese bekannte Einrichtung, die normalerweise einem zusätzlich zum Hauptfallschirm vorgesehenen Sicherungsfallschirm zugeordnet ist, hat sich in der Praxis bewährt. Probleme können allerdings auftreten, wenn der Hauptfallschirm so spät ausgelöst wird, daß die Auslösevorrichtung ihrerseits den Sicherungsfallschirm gleichzeitig oder kurz danach auslöst. Die Schirme können sich dann gegenseitig stören oder ihre Leinen können sich verheddern, was fatale Konsequenzen haben kann.

Die GB 707134 beschreibt eine Zusatzvorrichtung für eine Fallschirm-Auslösevorrichtung. Diese Zusatzvorrichtung verhindert ein Auslösen des Fallschirms bis eine vorgebbare Mindesthöhe erreicht ist und läßt erst dann die Auslösung zu.

Dies entspricht jedoch lediglich einer Deaktivierung der Sicherheitsvorrichtung vor Beginn des Sprungs und stellt somit eine (verschlechterte) Alternative zur oben dargestellten Aufnahme der "Geschichte" des Sprunges dar. Die oben beschriebenen Probleme sind damit nicht lösbar.

Der Erfindung liegt somit die Aufgabe zugrunde, eine automatische Auslösevorrichtung der eingangs genannten Art dahingehend zu verbessern, daß eine Fehlauslösung des Fallschirms während des gesamten Sprungs zuverlässig verhindert wird.

Die Lösung dieser Aufgabe erfolgt durch eine automatische Auslösevorrichtung gemäß Patentanspruch 1 und 6 bzw. durch ein Verfahren gemäß Patentanspruch 7; die abhängigen Patentansprüche betreffen vorteilhafte Ausgestaltungen der Erfindung.

Erfindungsgemäß ist neben dem Drucksensor und ggf. einem Temperatursensor noch ein vorzugsweise vom Drucksensor unabhängiger Hilfssensor oder mehrere (orthogonal organisiert) vorgesehen, der unter vorgebbaren Bedingungen die Auslösevorrichtung deaktiviert, d.h. eine Auslösung des Fallschirms verhindert.

Anders als bei bekannten Verriegelungsmechanismen, die eine manuelle Ver- bzw. Entriegelung erfordern (vgl. GB 707134), erfolgt erfindungsgemäß die Verriegelung somit automatisch.

Der Hilfssensor kann beispielsweise ein Beschleunigungssensor sein, der auf einen Körper wirkende Beschleunigungen direkt erfaßt und bei einer Mindestbeschleunigung, die aufgrund der Auffaltung des Fallschirms auf den Körper des Springers wirkt, das Auslösesystem deaktiviert.

Eine Alternative zu dem Beschleunigungssensor ist ein Kraftsensor oder mehrere, der in das Gurtzeug oder Leinensystem des Fallschirms eingefügt ist und die durch das Gurtzeug oder Leinensystem auf den Körper ausgeübte Kraft des aufgefalteten Fallschirms mißt. Dementsprechend kann eine Auffaltung des Fallschirms erkannt werden, und die Auslösevorrichtung kann deaktiviert werden.

Anstatt eines Kraftsensors kann auch ein Dehnungssensor verwendet werden, der eine aufgrund der übertragenden Kraft auftretende Dehnung in zumindest einer Leine oder eines Tragegurtes des Fallschirms ermittelt.

Vorzugsweise ist die erfindungsgemäße Auslösevorrichtung einem Sicherheitsfallschirm zugeordnet, der zusätzlich zu einem Hauptfallschirm vorgesehen ist. Es könnte auch, z.B. bei Lastenfallschirmen, ein einzelner Fallschirm sein.

Neben der mittelbaren Erfassung der Auslösung des Fallschirms aufgrund der obengenannten Sensoren besteht auch die Möglichkeit, einen Sensor direkt am Fallschirmbehälter, an der Reißleine oder an der Sicherungseinrichtung für den Fallschirm vorzusehen, um somit die Auslösung des Fallschirms direkt zu erfassen und die automatische Auslösevorrichtung dadurch zu deaktivieren. Dies läßt sich sowohl für den Fall nur eines Fallschirms als auch für den Fall eines Hauptfallschirms und eines Sicherungsfallschirms anwenden. Allerdings kann durch diese direkte Erfassung der Auslösung des Fallschirms nicht sichergestellt werden, daß dieser sich auch auffaltet und den Körper auch zuverlässig trägt. Insofern sind die erstgenannten Sensoren vorzuziehen.

Wenn man die bekannte Auslösevorrichtung so betreibt, daß Beschleunigungsdaten (aufgrund der Daten des Drucksensors) nicht nur in der Anfangsphase des Sprungs ausgewertet werden, sondern auch während der gesamten Sprungphase, kann aus den Beschleunigungswerten (Abbremsung) ebenfalls eine Bedingung abgeleitet werden, um die Auslösevorrichtung zu deaktivieren.

Als zusätzliche Sicherungsmaßnahme kann erfindungsgemäß die Deaktivierung der Auslösevorrichtung rückgängig gemacht werden. Beispielsweise ist der Fall denkbar, daß sich der Hauptfallschirm zunächst öffnet und dadurch den Springer abbremst, daß aber anschließend sich der Hauptfallschirm löst, eine oder mehrere Leinen reißen oder sich der Schirm teilweise wieder zusammenfaltet. In diesem Fall könnte eine über der Mindestbremsbeschleunigung liegende Beschleunigung erzielt werden, die die Auslösevorrichtung depassiviert. Entsprechendes gilt beispielsweise für eine Kollision von zwei Springern in der Luft. Um auch diese Fälle zu erfassen, wird erfindungsgemäß auch nach der Deaktivierung die Fallgeschwindigkeit überwacht, und wenn die Fallgeschwindigkeit zu hoch ist, d.h. deutlich höher als die Fallgeschwindigkeit beim Schweben mit aufgefaltetem Schirm, wird die automatische Auslösevorrichtung erneut aktiviert.

Eine Ausführungsform der Erfindung wird anhand der beigefügten Zeichnungen erläutert. Es zeigen:
- Fig. 1: schematisch den Aufbau einer erfindungsgemäßen Auslösevorrichtung und
- Fig. 2: schematisch ein Meßdiagramm für einen Absprung.

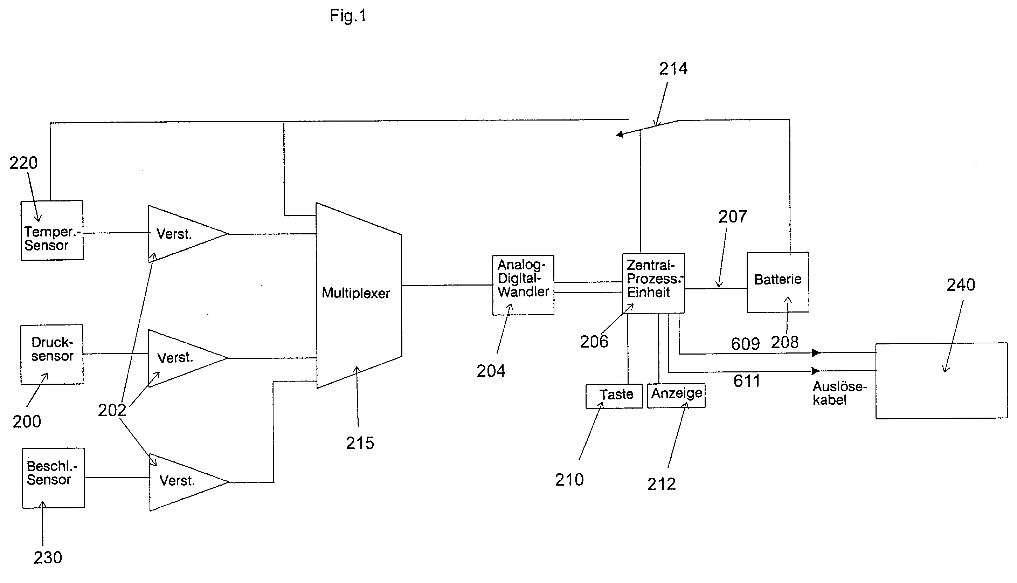

Fig. 1 zeigt das Prinzipschaltbild der Steuereinrichtung. Der gesamte Prozeß wird von einer Zentralprozessoreinheit 206 gesteuert, wobei die Stromversorgung 207 für die gesamte Einheit von einer Batterie 280 bereitgestellt wird. In dem Ausführungsbeispiel werden die Daten des Drucksensors 200 in einem Verstärker 202 verstärkt und einem Analog-Digitalwandler 204 zugeführt. Die digitalisierten Werte werden in der Prozessoreinheit entsprechend dem Meßprogramm analysiert, und bei Vorliegen einer Auslösebedingung (zu hohe Fallgeschwindigkeit bei Minimalhöhe) wird über Kabel 609, 611 eine Sicherungseinrichtung 240 ausgelöst. Diese trennt beispielsweise die Sicherungsleine des Fallschirms durch und gibt somit den Fallschirm frei. Ein Beispiel für eine derartige Trennvorrichtung ist in der eingangs genannten EP-A-281159 beschrieben, bei der die Sicherungsleine mittels eines Explosivtreibsatzes getrennt wird. Auf nähere Erläuterungen dieses bekannten Systems wird hier verzichtet, und es wird auf die genannte Schrift verwiesen.

Zur Stromersparnis schaltet die zentrale Prozessoreinheit während Warte- und Auswertezeiten die Stromversorgung des Drucksensors, des Verstärkers und des A-D-Wandlers mit einem steuerbaren Schalter 214 ab.

Dem A-D-Wandler 204 werden außer dem Signal des Luftdrucksensors 200 das Signal eines Temperatursensors 220 und die Batteriespannung über einen steuerbaren Meßmultiplexer 215 zugeführt. Diese Signale werden periodisch abgefragt und zur Korrektur der Drucksensorcharakteristik und der Errechnung der Höhenwerte aus den Luftdruckwerten berücksichtigt.

Zusätzlich ist noch erfindungsgemäß ein Beschleunigungssensor oder mehrere (orthogonal organisiert) 230 vorgesehen, der in gleicher Weise wie der Drucksensor 200 angeschlossen ist und entsprechend angesteuert wird. Derartige Beschleunigungssensoren sind allgemein bekannt, beispielsweise als Auslösesensoren für Airbags in Kraftfahrzeugen.

Der Beschleunigungssensor 230 kann als ein Sensor ausgebildet sein, der kontinuierlich ein der Beschleunigung entsprechendes Signal abgibt. Die Zentralprozessoreinheit vergleicht dann periodisch das Signal des Beschleungigungssensors 230 mit einem vorgebbaren Wert, der einer bestimmten, erforderlichen Bremsbeschleunigung entspricht. Überschreitet die gemessene Bremsbeschleunigung den vorgegebenen Wert, so wird die Abgabe des Auslösesignals an die Auslösevorrichtung 240 gesperrt.

Demgegenüber kann der Beschleunigungssensor auch als Impulssensor aufgebaut sein, der seinerseits nur dann ein Signal abgibt, wenn die gemessene Beschleunigung einen bestimmten Wert überschreitet, wobei dieser Impuls dann als Sperrimpuls für die Auslösevorrichtung verwendet werden kann.

Der Beschleunigungssensor kann in dem Aufnahmebehälter für den Fallschirm vorgesehen sein oder an ihm befestigt sein. Wird statt des Beschleunigungssensors ein Kraft- oder ein Dehnungssensor verwendet, so ist dieser am Leinen- oder Gurtzeugsystem des Fallschirms vorgesehen. Auch können mehrere derartige Sensoren vorhanden sein, deren Signale gleichzeitig überwacht werden.

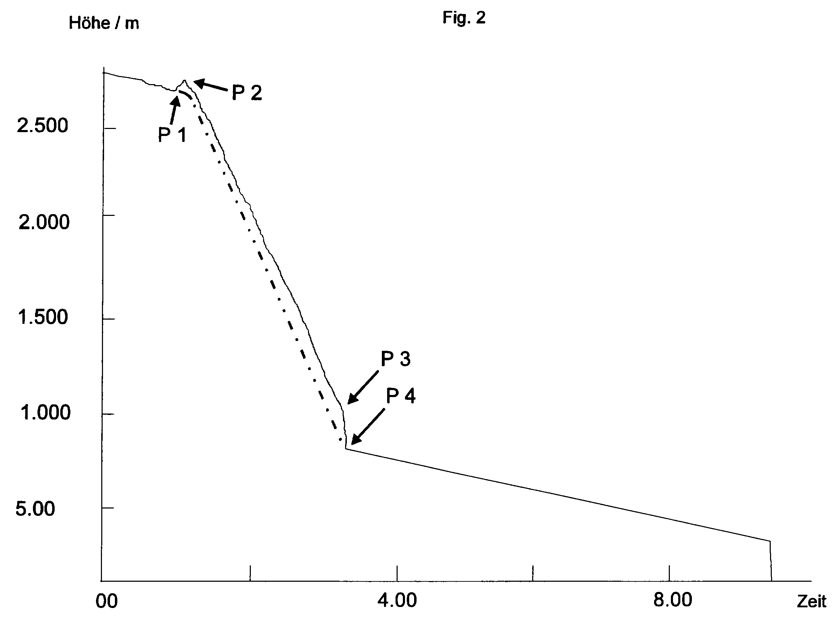

Fig. 2 zeigt beispielsweise ein Meßdiagramm für den Druckverlauf während eines typischen Absprungs, wobei die Druckwerte in Höhenwerte umgerechnet sind.

Insbesondere wird die dynamische Druckänderung zu Beginn des Freifalles, die zwischen den Meßpunkten P1, P2 auftritt, berechnet und korrigierend berücksichtigt, woraus sich die tatsächliche Höhe (strichpunktiert gezeichnet) ergibt.

Zu Beginn des Schwebens am Fallschirm tritt ebenfalls eine Druckänderung auf, was zwischen den eingezeichneten Meßpunkten P3 und P4 ersichtlich ist. Anschließend an den Meßpunkt P4 erfolgt der Schwebflug am Fallschirm.

Durch Überwachen der Druckwerte hinsichtlich der charakteristischen Druckänderungen bezüglich der Meßpunkte P3 und P4 und der anschließenden Bremsbeschleunigung (Knick in der Meßkurve) kann ebenfalls das Auslösen des Fallschirms erkannt werden und dementsprechend die automatische Auslösevorrichtung gesperrt werden. Dies bietet zwar den Vorteil, daß kein zusätzlicher Sensor vorzusehen ist, allerdings verzögert sich die Auswertung wegen der nur mittelbaren Erfassung der Beschleunigung. Dies ist unter Umständen nachteilig, da bei der Auslösevorrichtung Wert auf möglichst unmittelbare Erkennung der Bewegungsänderung gelegt werden sollte. Insofern ist die obengenannte Ausführungsform mit separaten Sensoren diesem Verfahren vorzuziehen. Schließlich ist es auch denkbar, einen speziell zum Erkennen von Beschleunigungen ausgebildeten Drucksensor zu verwenden.

Um die Sicherungsfunktion der automatischen Auslösevorrichtung auch nach einer Deaktivierung durch den Beschleunigungssensor sicherzustellen, überwacht die Zentralprozessoreinheit auch in diesem Fall die Daten des Drucksensors und ermittelt die Fallgeschwindigkeit. Sollte die Fallgeschwindigkeit anschließend wieder über eine Maximalgeschwindigkeit ansteigen, wird die automatische Auslösevorrichtung erneut aktiviert, weil in diesem Fall angenommen wird, daß sich der Fallschirm nicht ordnungsgemäß geöffnet hat oder Leinen gerissen sind oder dergleichen.

## Patentansprüche

1. Automatische Auslösevorrichtung für einen Fallschirm, der gebrauchsfertig durch eine lösbare Sicherungsvorrichtung in einem zusammengefalteten Zustand gehalten wird und an einem Körper wie einem Fallschirmspringer, einer Traglast od. dgl. zu befestigen ist, mit
einem Drucksensor (200) zur Erfassung des Drucks in der Umgebung des Körpers und einer mit dem Drucksensor (200) verbundenen Steuereinrichtung (206), wobei die Steuereinrichtung (206) abhängig von Signalen des Drucksensors (200) und vorgebbaren Daten eine Momentanfallhöhe und eine Momentanfallgeschwindigkeit des Körpers ermittelt und ein Auslösesignal an die Sicherungsvorrichtung zum Freigeben des Fallschirms abgibt, wenn bei einer vorgegebenen Mindesthöhe die Momentangeschwindigkeit einen vorgegebenen Maximalwert überschreitet,
**gekennzeichnet** durch zumindest einen Hilfssensor (230), über den eine Änderung des Bewegungszustandes des Körpers mittelbar oder unmittelbar erfaßt werden kann und der mit der Steuereinrichtung (206) verbunden ist, wobei die Steuereinrichtung die Signale des Hilfssensors (230) überwacht und die Freigabe des Fallschirms verhindert, wenn die erfaßte Änderung einen Mindestwert überschreitet.

2. Auslösevorrichtung nach Anspruch 1,
dadurch **gekennzeichnet,** daß der Hilfssensor ein Beschleunigungssensor (230) ist, der eine auf den Körper oder das Gehäuse der Vorrichtung wirkende Beschleunigung erfaßt, wobei die Abgabe des Auslösungssignals gesperrt wird, wenn eine Mindestbremsbeschleunigung überschritten wird.

3. Auslösevorrichtung nach Anspruch 1,
dadurch **gekennzeichnet,** daß der Hilfssensor ein Kraftsensor ist, der eine vom Gurtzeug oder Leinensystem des Fallschirms auf den Körper übertragene Kraft ermittelt, wobei die Abgabe des Auslösesignals gesperrt wird, wenn eine Mindestbremskraft überschritten wird.

4. Auslösevorrichtung nach Anspruch 1,
dadurch **gekennzeichnet,** daß der Hilfssensor ein Dehnungssensor ist, der die Dehnung mindestens einer Leine des Leinensystems oder eines Tragegurtes des Gurtsystems des Fallschirms ermittelt, wobei die Abgabe des Auslösesignals gesperrt wird, wenn eine Mindestdehnung überschritten wird.

5. Auslösevorrichtung nach einem der Ansprüche 1 bis 4,
dadurch **gekennzeichnet,** daß die Auslösevorrichtung einem neben einem Hauptfallschirm vorgesehenen Sicherheitsschirm zugeordnet ist bzw., z.B. bei Lastenfallschirmen, einem einzelnen Fallschirm.

6. Automatische Auslösevorrichtung für einen Sicherheitsfallschirm, der gebrauchsfertig durch eine lösbare Sicherungsvorrichtung in einem zusammengefalteten Zustand gehalten wird und an einem Körper wie einem Fallschirmspringer, einer Traglast od. dgl. zu befestigen ist und zusammen mit einem Hauptfallschirm verwendbar ist, mit
einem Drucksensor (200) zur Erfassung des Drucks in der Umgebung des Körpers und einer mit dem Drucksensor (200) verbundenen Steuereinrichtung (206), wobei die Steuereinrichtung (206) abhängig von Signalen des Drucksensors (200) und vorgebbaren Daten eine Momentanfallhöhe und eine Momentanfallgeschwindigkeit des Körpers ermittelt und ein Auslösesignal an die Sicherungsvorrichtung zum Freigeben des Fallschirms abgibt, wenn bei einer vorgegebenen Mindesthöhe die Momentangeschwindigkeit einen vorgegebenen Maximalwert überschreitet,
**gekennzeichnet** durch einen Hilfssensor (230), der mit der Steuereinrichtung (206) verbunden ist und von ihr überwacht wird, wobei der Hilfssensor ein Auslösesensor ist, der eine Auslösung des Hauptfallschirms anzeigt und die Steuereinrichtung die Freigabe des Sicherheitsfallschirms verhindert, wenn der Hauptfallschirm ausgelöst wurde.

7. Verfahren zur Steuerung einer automatischen Auslösevorrichtung für einen Fallschirm, der gebrauchsfertig durch eine lösbare Sicherungsvorrichtung in einem zusammengefalteten Zustand gehalten wird und an einem Körper wie einem Fallschirmspringer, einer Traglast oder dgl. zu befestigen ist, mit
einem Drucksensor (200) zur Erfassung des Druckes in der Umgebung des Körpers und einer mit dem Drucksensor (200) verbundenen Steuereinrichtung (206), wobei die Steuereinrichtung (206) abhängig von den Signalen des Drucksensors und vorgebbaren Daten eine Momentanhöhe und eine Momentanfallgeschwindigkeit des Körpers ermittelt und ein Auslösesignal an die Sicherungsvorrichtung zum Freigeben des Fallschirms abgibt, wenn bei einer vorgegebenen Minimalhöhe die Momentanfallgeschwindigkeit einen vorgegebenen Maximalwert überschreitet,
dadurch **gekennzeichnet,** daß man den Bewegungszustand des Körpers unmittelbar oder mittelbar überwacht und die Freigabe des Fallschirms verhindert, wenn eine Änderung über einer vorgebbaren Mindeständerung liegt.

8. Verfahren nach Anspruch 7,
dadurch **gekennzeichnet,** daß man die Freigabe des Fallschirms verhindert, indem man die Abgabe des Auslösesignals sperrt.

9. Verfahren nach Anspruch 7 oder 8,
dadurch **gekennzeichnet,** daß man aus den Daten des Drucksensors (200) eine Momentanbeschleunigung ermittelt und die Freigabe des Fallschirms verhindert, wenn die Momentanbeschleunigung eine Mindestbremsbeschleunigung übersteigt.

10. Verfahren zur Steuerung einer Auslösevorrichtung nach einem der Ansprüche 1 bis 6 oder Steuerverfahren nach einem der Ansprüche 7 - 9,
dadurch **gekennzeichnet,** daß man nach dem Sperren der Auslösevorrichtung die Momentanfallgeschwindigkeit ermittelt und die automatische Auslösevorrichtung reaktiviert, wenn die Momentanfallgeschwindigkeit einen Maximalwert überschreitet.
